# EUROPÄISCHE PATENTSCHRIFT

(11) **EP 0 898 070 B1**
(45) Veröffentlichungstag und Bekanntmachung des Hinweises auf die Patenterteilung: **16.11.2005**
(21) Anmeldenummer: 98112648.5
(22) Anmeldetag: 08.07.1998
(51) Int. Cl.: F02D 41/34, F02D 41/06

(54) **Verfahren zur Erkennung des Verbrennungstaktes eines bestimmten Zylinders beim Start einer Brennkraftmaschine**
Method for identifying the combustion stroke of a selected cylinder during the starting phase of a combustion engine
Méthode pour identifier la phase de combustion d'un cylindre déterminé pendant le démarrage d'un moteur à combustion interne

(30) Priorität: 18.08.1997 DE 19735720
(43) Veröffentlichungstag der Anmeldung: 24.02.1999
(73) Patentinhaber: Bayerische Motoren Werke Aktiengesellschaft, 80788 München (DE)
(72) Erfinder: Siegl, Norbert, 83661 Lenggries (DE)

(56) Entgegenhaltungen:
- EP-A- 0 638 717
- WO-A-93/20345
- FR-A- 2 637 652
- FR-A- 2 724 416

## Beschreibung

Die Erfindung betrifft ein Verfahren zur Erkennung des Verbrennungstaktes eines bestimmten Zylinders beim Start einer Brennkraftmaschine.

Ein derartiges Verfahren ist beispielsweise aus der EP-A-0 638 717 bekannt. In diesem bekannten Verfahren wird keine Lösung für die Anforderung einer genauen Zuordnung der Kurbelwelle zur Nockenwelle angegeben.

Ein weiteres Verfahren zur Erkennung des Verbrennungstaktes eines bestimmten Zylinders beim Start einer Brennkraftmaschine wird beispielsweise im Kapitel "Drehzahl, Kurbelwellen- und Nockenwellenstellung" des Fachbuchs "Autoelektrik, Autoelektronik am OttoMotor" der Firma Bosch, VDI-Verlag, 1994, Seite 224 ff., beschrieben. Dieses bekannte Verfahren wird mittels eines Kurbelwellenwinkel-Sensors (Drehzahlsensor), mittels eines Nockenwellenwinkel-Sensors (Hall-Sensor) und mittels eines elektronischen Steuergerätes (Motronic) durchgeführt. Der Kurbelwellenwinkel-Sensor wirkt mit einem auf der Kurbelwelle angebrachten, mit einer Vielzahl von Zähnen und kleinen Zahnlücken sowie mit einer großen Zahnlücke versehenen Geberrad zusammen. Im Steuergerät wird das Signal des Kurbelwellenwinkel-Sensors in eine Rechteckspannung mit konstanter Amplitude umgeformt. Dabei entspricht ein high-Pegel einem Zahn und ein low-Pegel einer Zahnlücke. Zur Ermittlung der Winkellage der Brennkraftmaschine werden die Flankenabstände der Rechteckspannung ausgewertet. Die große Zahnlücke ist einer definierten Kurbelwellenstellung des Zylinders 1 zugeordnet. Bei dem bekannten Verfahren sowie bei der Erfindung wird von einer Viertakt-Brennkraftmaschine ausgegangen. Die Zylinder einer Viertakt-Brennkraftmaschine sind so gegeneinander versetzt, daß nach zwei Kurbelwellenumdrehungen der Zylinder 1 erneut mit dem Arbeitszyklus beginnt. Die Kolbenstellung eines Zylinders wird als Meßgröße zur Festlegung des Zündzeitpunktes verwendet. Die Kolben aller Zylinder sind über Pleuelstangen mit der Kurbelwelle verbunden. Der Kurbelwellenwinkel-Sensor liefert deshalb auch die Information über die Kolbenstellung aller Zylinder.

Die Nockenwelle steuert die Einlaßventile und die Auslaßventile des Motors. Sie dreht sich halb so schnell wie die Kurbelwelle. Wenn sich ein Kolben zum oberen Totpunkt bewegt (entspricht z. B. der großen Zahnlücke für den Zylinder 1), bestimmt die Nockenwelle durch die Stellung der Ein- und Auslaßventile, ob sich der Zylinder im Verbrennungstakt oder im Auspufftakt befindet. Aus der Kurbelwellenstellung allein kann diese Information nicht gewonnen werden. Auch wenn der Zeitpunkt der Einspritzung für jeden Zylinder individuell angepaßt ist (sequentielle Einspritzung), ist die Information der Nockenwellenstellung nötig.

Bei dem bekannten Verfahren wird zur Erkennung des Verbrennungstaktes des Zylinders 1 vom Steuergerät überprüft, ob während des Passierens der (großen) Geberrad-Zahnlücke das Signal des Nockenwellenwinkel-Sensors einen high- oder low-Pegel aufweist. Im folgenden wird die große Zahnlücke als Bezugsmarke bezeichnet.

Bei dem bekannten Verfahren können ggf. zur Erkennung des Verbrennungstaktes eines bestimmten Zylinders für die Synchronisation der Zündung und/oder Einspritzung beim Start der Brennkraftmaschine nahezu zwei Kurbelwellen-Umdrehungen notwendig sein. Hierdurch wird die Startzeit einer Brennkraftmaschine verzögert, da bis zur Synchronisation keine winkelsynchrone Ausgabe der Zündung und/oder Einspritzung möglich ist.

Es ist daher Aufgabe der Erfindung, eine schnellstmögliche Synchronisation der kurbelwellenwinkelsynchronen Ereignisse (Zündung und Einspritzung) zu erreichen.

Diese Aufgabe wird durch das Verfahren nach Patentanspruch 1 gelöst.

Durch das erfindungsgemäße Verfahren ist eine eindeutige Synchronisation nach maximal einer halben Kurbelwellenumdrehung möglich.

In der Zeichnung ist ein Ausführungsbeispiel der Erfindung dargestellt. Es zeigen
- Fig. 1 bis 4: die vier möglichen Synchronisationspunkte nach dem erfindungsgemäßen Verfahren am Beispiel einer Viertakt-Vierzylinder-Brennkraftmaschine und
- Fig. 5: ein Nockenwellengeberrad in Form einer Halbsegmentscheibe.

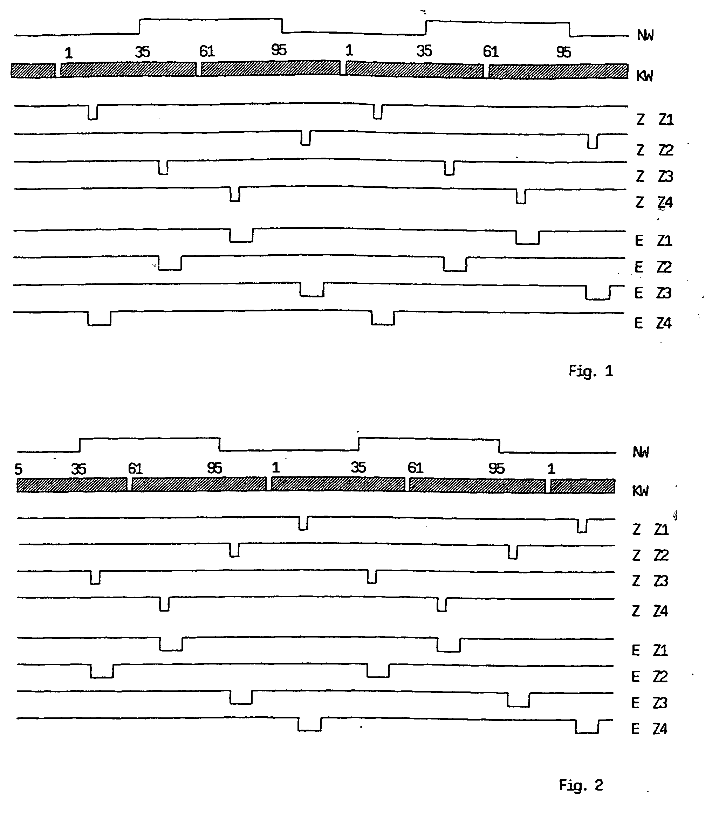

Die Fig. 1 bis 4 weisen die Zeitabläufe des Signals NW des Nockenwellenwinkel-Sensors, des Signals KW des Kurbelwellenwinkel-Sensors und der Signale zur Zündung Z Z1 bis Z Z4 sowie zur Einspritzung E Z1 bis E Z4 für die vier Zylinder der hier nicht dargestellten Brennkraftmaschine auf. Diese Zeitabläufe beginnen jeweils beim Start der Brennkraftmaschine ausgehend von vier unterschiedlichen Stellungen der Kurbelwelle und der Nockenwelle, die sich beim Motorauslauf einstellen können. Zur näheren Erläuterung des Signals KW der Kurbelwelle wird ergänzend auf die Seiten 224 und 225 des bereits genannten Fachbuches verwiesen. Die schraffierten Flächen des Kurbelwellen-Signals KW entspricht der Folge von 58 Zähnen. Die Signallücke entspricht der Bezugsmarke in Form der großen Zahnlücke am Kurbelwellengeberrad. In den Fig. 1 bis 4 werden jedoch zwei Kurbelwellenumdrehungen, die einer Nockenwellenumdrehung entsprechen, in der Zähnezahl durchgezählt, so daß der erste Zahn nach der Bezugsmarke vor der ersten Umdrehung mit 1 und der erste Zahn nach der Bezugsmarke vor der zweiten Umdrehung mit 61 bezeichnet wird.

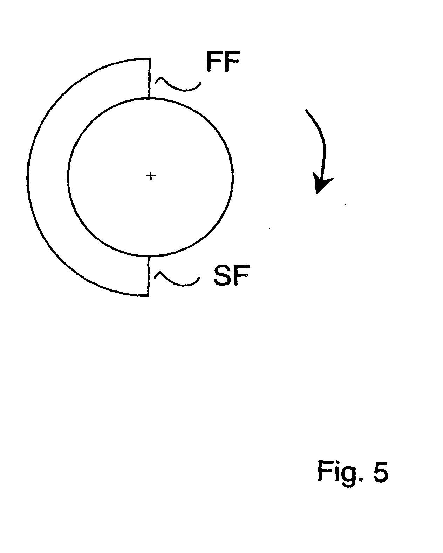

Das Nockenwellengeberrad ist in Form einer Halbsegmentscheibe (vgl. Fig. 5) in Bezug auf das Kurbelwellengeberrad derart angeordnet, daß die fallende und die steigende Flanke des Signals NW des Nockenwellen-Sensors jeweils in etwa nach einer halben Kurbelwellenumdrehung beginnend mit der Bezugsmarke auftreten. Im vorliegenden Fall ist die steigende Flanke dem Impuls 35 des Kurbelwellen-Signals KW und die fallende Flanke dem Impuls 95 des Kurbelwellen-Signals KW zugeordnet. Der Impuls 35 entspricht dem 35. Zahn auf dem Kurbelwellengeberrad bei der ersten Kurbelwellenumdrehung und der Impuls 95 entspricht dem 35. Zahn des Kurbelwellengeberrades bei der zweiten Kurbelwellenumdrehung.

In Fig. 1 findet kurz nach dem Start der Brennkraftmaschine die Synchronisation der Zündung Z Z1 des ersten Zylinders und die Einspritzung E Z4 des vierten Zylinders auf den Impuls 1 des Kurbelwellen-Signals KW statt, bei dem das Nockenwellen-Signal NW einen low-Pegel aufweist. In Fig. 2 findet die Synchronisation bei der steigenden Flanke des Nockenwellen-Signals NW, dem der Impuls 35 des Kurbelwellen-Signals KW zugeordnet ist, statt. Bei der steigenden Flanke des Nockenwellen-Signals NW findet die Synchronisation für die Zündung Z Z3 des Zylinders 3 und für die Einspritzung E Z2 für den Zylinder 2 unter der Annahme statt, daß der mit der steigenden Flanke des Nockenwellen-Signals NW auftretende Impuls des Kurbelwellen-Signals KW der 35. Impuls ist. Wenn diese Annahme beispielsweise aufgrund geringfügiger Fehler nicht zutrifft, ist spätestens mit der nächsten Bezugsmarke eine Korrektur möglich.

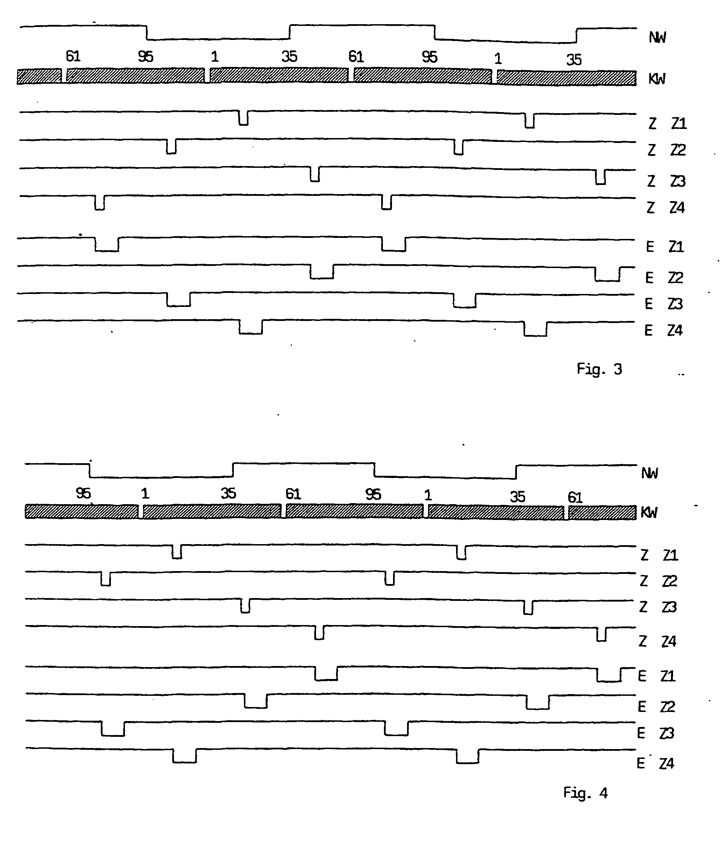

In Fig. 3 findet die Synchronisation beim Impuls 61 des Kurbelwellen-Signals KW statt, bei dem das Nockenwellen-Signal NW einen high-Pegel aufweist. Hiernach findet die Synchronisation für die Zündung Z Z4 im vierten Zylinder und für die Einspritzung E Z1 in den ersten Zylinder statt.

In Fig. 4 wird mit der ersten fallenden Flanke des Nockenwellen-Signals NW unter der Annahme des Vorliegens des Impulses 95 beim Kurbelwellen-Signal KW synchronisiert. Danach findet die Zündung Z Z2 im zweiten Zylinder und die Einspritzung E Z3 in den dritten Zylinder statt. Die Zünd- und Einspritzreihenfolgen nach der Synchronisation sind in üblicher Weise festgelegt.

Mit diesem erfindungsgemäßen Ausführungsbeispiel wird dargestellt, daß vier in etwa gleich verteilte Synchronisationspunkte nach dem Start einer Brennkraftmaschine derart möglich sind, daß maximal eine halbe Umdrehung der Kurbelwelle für eine Synchronisation erforderlich ist. Bei einer Viertakt-Vierzylinder-Brennkraftmaschine kann somit der Verbrennungstakt jedes auf den Start folgenden Zylinders erkannt werden. Somit ist bereits beim Start der Brennkraftmaschine eine winkelrichtige Ausgabe von Zündung und Einspritzung möglich.

## Patentansprüche

1. Verfahren zur Erkennung des Verbrennungstaktes eines bestimmten Zylinders beim Start einer Brennkraftmaschine in Kraftfahrzeugen mittels eines Kurbelwellenwinkel-Sensors, der mit einem mit Zähnen und einer Bezugsmarke versehenen Kurbelwellengeberrad zusammenwirkt, mittels eines Nockenwellenwinkel-Sensors der mit einem Nockenwellengsberrad zur Unterscheidung des Verbrennungstaktes und des Auspufftaktes der Zylinder zusammenwirkt, wobei das Nockenwellengeberrad in Form einer Halbsegmentscheibe ausgebildet und derart angeordnet ist, dass die fallende und die steigende Flanke des Signals (NW) des Nockenwellenwinkel-Sensors jeweils in etwa nach einer halben Kurbelwellenumdrehung beginnend mit der Bezugsmarke auftreten, und mittels eines elektronischen Steuergerätes, wobei sowohl die High- und die Low-Pegel als auch die fallenden und die steigenden Flanken des Signals (NW) des Nockenwellenwinkel-Sensors im Steuergerät ausgewertet und zum Signal (KW) des Kurbelwellen-Sensors in Bezug gesetzt werden.

2. Verfahren nach Anspruch 1 wobei
- eine Synchronisation bei der steigenden Flanke des Nockenwellen-Signals (NW), dem ein erster bestimmter Impuls des Kurbelwellen-Signals (KW) zugeordnet ist, stattfindet,
- oder eine Synchronisation mit der ersten fallenden Flanke des Nockenwellen-Signals (NW), unter Annahme des Vorliegens eines zweiten bestimmten Impulses beim Kurbelwellen-Signal (KW) erfolgt,
- oder eine Synchronisation auf den Impuls 1 des Kurbelwellensignals (KW), bei dem das Nockenwellen-Signal (NW) einen low-Pegel aufweist, stattfindet,
oder eine Synchronisation beim Impuls 61 des Kurbelwellensignals (KW), bei dem das Nockenwellen-Signal (NW) einen high-Pegel aufweist, erfolgt,
wobei der erste Zahn nach der Bezugsmarke vor der ersten Umdrehung der Kurbelwelle mit Impuls 1 und der erste Zahn nach der Bezugsmarke vor der zweiten Umdrehung der Kurbelwelle mit Impuls 61 bezeichnet wird.

## Claims

1. A method for recognising the combustion cycle of a specific cylinder during the start of an internal combustion engine in motor vehicles by means of a crankshaft angle sensor, which cooperates with a crankshaft transmitter wheel provided with teeth and a reference mark, by means of a camshaft angle sensor, which cooperates with a camshaft transmitter wheel to distinguish the combustion cycle and the exhaust cycle of the cylinders, wherein the camshaft transmitter wheel is configured in the form of a half-segment disk and is arranged in such a way that the descending and ascending edge of the signal (NW) of the camshaft angle sensor in each case occur approximately after a half crankshaft rotation beginning with the reference mark, and by means of an electronic control apparatus, wherein both the high and the low level and also the descending and ascending edges of the signal (NW) of the camshaft angle sensor are evaluated in the control apparatus and set in relation to the signal (KW) of the crankshaft sensor.

2. A method according to claim 1, wherein
- a synchronisation takes place in the case of the ascending edge of the camshaft signal (NW), to which a first specific pulse of the crankshaft signal (KW) is allocated,
- or a synchronisation takes place with the first descending edge of the camshaft signal (NW), assuming the presence of a second specific pulse in the case of the crankshaft signal (KW),
- or a synchronisation takes place to the pulse 1 of the crankshaft signal (KW), in which the camshaft signal (NW) has a low level, or a synchronisation takes place in the case of pulse 61 of the crankshaft signal (KW), at which the camshaft signal (NW) has a high level, wherein the first tooth after the reference mark before the first rotation of the crankshaft is designated pulse 1 and the first tooth after the reference mark before the second rotation of the crankshaft is designated pulse 61.

## Revendications

1. Procédé de détection d'un cycle de combustion d'un cylindre déterminé lors du démarrage d'un moteur à combustion interne dans des véhicules automobiles au moyen d'un capteur d'angle de vilebrequin qui coopère avec une roue de capteur de vilebrequin munie de dents et d'un repère de référence, d'un capteur d'angle d'arbre à cames qui pour distinguer les cycles de combustion et d'échappement, coopère avec une roue de capteur d'arbre à cames qui a la forme d'un disque à demi-segment et est disposée de telle sorte que les flancs descendant et montant du signal (NW) du capteur d'angle d'arbre à cames se produisent chacun sensiblement après un demi-tour de vilebrequin à partir du repère de référence, et au moyen d'un appareil de commande électronique qui exploite aussi bien les niveaux hauts et bas que les flancs descendant et montant du signal (NW) du capteur d'angle d'arbre à cames et les met en relation avec le signal (KW) du capteur de vilebrequin.

2. Procédé selon la revendication 1, dans lequel une synchronisation s'effectue :
- lors du flanc montant du signal d'arbre à cames (NW) auquel est associée une première impulsion déterminée du signal de vilebrequin (KW), ou
- lors du premier flanc descendant du signal d'arbre à cames (NW) en supposant la présence d'une deuxième impulsion déterminée du signal de vilebrequin (KW), ou
- suite à l'impulsion 1 du signal de vilebrequin (KW), le signal d'arbre à cames (NW) présentant un niveau bas, ou
- suite à l'impulsion 61 du signal de vilebrequin (KW), le signal d'arbre à cames (NW) présentant un niveau haut,
- et la première dent après le repère de référence et avant le premier tour du vilebrequin est désignée par impulsion 1 et la première dent après le repère de référence et avant le deuxième tour du vilebrequin par impulsion 61.
